# FASCICULE DE BREVET EUROPEEN

(11) **EP 1 703 241 B1**
(45) Date de publication et mention de la délivrance du brevet: **18.07.2007**
(21) Numéro de dépôt: 06447004.0
(22) Date de dépôt: 10.01.2006
(51) Int. Cl.: F27D 21/00, F27D 19/00, C21C 5/52

(54) **Dispositif et procédé de contrôle dynamique de la combustion d'un brûleur dans un four électrique à arc**
Vorrichtung und Verfahren zur dynamischen Steuerung eines Brenners in einem Lichtbogenofen
Device and process for the dynamic combustion control of a burner of an electric arc furnace

(30) Priorité: 16.03.2005 BE 200500140
(43) Date de publication de la demande: 20.09.2006
(73) Titulaire: CENTRE DE RECHERCHES METALLURGIQUES asbl - CENTRUM VOOR RESEARCH IN DE METALLURGIE vzw, B-1200 BRUXELLES (BE)
(72) Inventeur: Nyssen, Pierre, 4031 Angleur (BE); Mathy, Cécile, 4347 Voroux-Goreux (BE); Schyns, Marc, 4690 Roclenge-sur Geer (BE)
(74) Mandataire: Lerho, Marc J. A.

(56) Documents cités:
- EP-A- 1 457 575
- US-A- 5 904 895

## Description

### Objet de l'invention

La présente invention se rapporte à un dispositif de contrôle dynamique de la combustion des brûleurs d'un four électrique d'aciérie, en particulier d'un four électrique à arc en vue d'améliorer ou d'optimiser le rendement énergétique du four.

L'invention se rapporte également au procédé mettant en oeuvre le dispositif.

### Arrière-plan technologique et état de la technique

Il est connu qu'un four électrique à arc, appelé succinctement par la suite "four à arc", comporte plusieurs brûleurs, généralement disposés sur la paroi latérale du four. De plus, la charge d'un four à arc d'aciérie est constituée principalement par des déchets métalliques pouvant contenir des pièces déclassées ou des débris de fonte, d'acier ou de métaux ferreux, qui seront dans la suite de la description appelés indistinctement "mitraille(s)" ou "ferraille(s)".

Dans les fours à arc, on utilise des brûleurs utilisant un couple gaz comburant / combustible gazeux ou liquide, de préférence de l'oxygène ou de l'air comme gaz comburant avec par exemple le gaz naturel comme combustible. Ces brûleurs sont pilotés et contrôlés habituellement suivant un mode opératoire prédéfini déterminant le rapport oxygène comburant / gaz carburant ainsi que la durée de fonctionnement du brûleur, sans tenir compte du fait que l'efficacité en fonctionnement de chaque brûleur individuel dépend de la charge effective en ferraille se trouvant en face (de la flamme) du brûleur.

L'utilisation de modes dé fonctionnement préprogrammés des brûleurs présente notamment les inconvénients suivants :
- on ne prend pas en considération que l'efficacité de chaque brûleur individuel dépend de la charge effective en ferraille en face de ce brûleur particulier. En conséquence, une partie significative de l'énergie consommée par le brûleur est utilisée avec un faible rendement, puisque les brûleurs sont mis en oeuvre suivant un schéma opérationnel arbitraire, quand bien même la fusion est réalisée et qu'il n'y a plus suffisamment de ferraille en face du brûleur ;
- de plus, si une pièce de ferraille plus lourde ou encombrante que les autres tombe par accident trop près d'un brûleur fonctionnant avec une longue flamme, la flamme peut être déviée et endommager les parois du four, causant éventuellement par là des fuites dangereuses d'eau de refroidissement.

Pour améliorer le rendement des brûleurs en fonction de l'énergie électrique et fossile d'entrée, un contrôle dynamique du brûleur est requis. On entend par contrôle dynamique un contrôle ou une régulation en temps réel qui tient compte des conditions opérationnelles de combustion à un instant donné, par opposition à un point de fonctionnement préprogrammé.

On connaît déjà des dispositifs de contrôle du fonctionnement ou du réglage d'un four électrique à arc. Notamment, le demande de brevet européen EP-A-1 457 575 décrit un dispositif d'observation de la charge de mitrailles dans un four d'aciérie comprenant plusieurs brûleurs disposés au-dessus du niveau du bain en fusion. Au moins un des brûleurs est équipé d'une caméra disposée à l'intérieur du brûleur. Par exemple, il peut s'agir d'une caméra infrarouge endoscopique disposée de manière telle que son axe de visée coïncide avec l'axe longitudinal du brûleur. Cette caméra et les moyens de contrôle qui lui sont associés permettent de surveiller la fusion de la charge de mitrailles au cours du temps et d'adapter la cadence de chargement des paniers de mitraille.

Dans le brevet américain US-B-6 440 355, on décrit un dispositif de mesure optique, rétractable dans un logement de protection et solidaire du système de manutention d'une lance à oxygène dans un convertisseur à l'oxygène. Ce dispositif de mesure comprend une tête optique à laser apte à envoyer un faisceau incident sur une zone cible dans le four, tel que la surface du laitier, à recevoir et détecter le faisceau réfléchi et à déterminer, par comparaison des deux faisceaux, la distance à laquelle se trouve la zone cible. Ce dispositif a pour seul objet de permettre un ajustement correct de la distance séparant le laitier de la tête de la lance à oxygène.

Dans le brevet américain US-A-5 125 745, on décrit par ailleurs un appareil d'inspection mobile pouvant être amené à proximité de l'ouverture d'un four disposé horizontalement. L'appareil comprend un laser pouvant éclairer le revêtement interne du four. La lumière diffusée par celui-ci peut être reçue par un réseau de détection linéaire autobalayé et couplé à un ordinateur pour donner une représentation graphique de l'état d'usure du revêtement interne du four.

### Buts de l'invention

La présente invention vise à proposer une solution qui permette de s'affranchir des inconvénients de l'état de la technique.

En particulier, la présente invention vise à fournir un procédé de contrôle dynamique, c'est-à-dire en cours de fonctionnement, des brûleurs à oxyfuel montés sur las parois du four à arc.

Un but complémentaire de l'invention est d'améliorer, voire d'optimiser le rendement des brûleurs du four à arc.

Un autre but est encore d'obtenir un fonctionnement fiable et reproductible du four à arc, en vue d'obtenir une fusion optimale d'une quantité donnée de ferraille, au moyen d'une énergie électrique moindre et d'une consommation en gaz réduite par rapport aux systèmes utilisés dans l'état de la technique.

### Principaux éléments caractéristiques de l'invention

Un premier objet de la présente invention se rapporte à un dispositif pour le contrôle dynamique de la combustion d'un brûleur à combustible gazeux ou liquide dans un four électrique à arc, en particulier dans un four à arc d'aciérie, ledit brûleur émettant en utilisation une flamme par une ouverture située à l'extrémité du brûleur, au-dessus d'un bain de métal fondu lui-même surmonté d'une charge de mitraille, caractérisé en ce qu'il comprend des moyens de mesure sans contact, situés à l'extérieur du four à arc, pour estimer la distance entre l'extrémité du brûleur et une cible constituée par de la mitraille solide située en face de ladite extrémité, lesdits moyens comprenant une source émettant un signal passant à l'intérieur dudit brûleur, ou d'un autre brûleur, en direction de ladite cible, et un détecteur où est capté ledit signal réfléchi par la cible, également en passant à l'intérieur dudit brûleur, respectivement de l'autre brûleur.

Selon une première modalité de mise en oeuvre préférée de l'invention, les moyens de mesure de distance entre l'extrémité du brûleur et la mitraille solide comprennent une tête de détection de type capteur de distance optique, situé à l'intérieur ou à l'arrière du brûleur, présentant un laser de préférence pulsé émettant un faisceau incident visant la mitraille à travers une ouverture située dans l'axe du brûleur et un photodétecteur apte à recevoir le faisceau laser réfléchi par la mitraille.

Selon cette modalité d'exécution, la tête de détection est configurée pour effectuer la mesure de distance sur une cible portée à haute température, de préférence à une température qui peut atteindre 1500°C et/ou pour effectuer ladite mesure dans un environnement ou sur un trajet optique présentant des flammes.

Avantageusement, la tête de détection est équipée de moyens de refroidissement, par exemple en utilisant de l'eau:

De préférence, le laser est une diode laser semi-conductrice émettant dans l'infrarouge, équipée d'une lentille collimatrice et d'un filtre, de préférence un filtre interférentiel, pour éliminer ou atténuer le bruit de fond lié au rayonnement propre du four à arc.

Toujours de préférence, le photodétecteur comprend une lentille de réception avec un filtre interférentiel et au moins une photodiode, couplée à un système électronique de détection haute fréquence.

Encore avantageusement, la photodiode et donc la tête de détection est couplée par fibre optique au système électronique de détection haute fréquence, ce qui permet de mieux protéger ce dernier par rapport à l'environnement éventuellement difficile où se trouve le capteur.

Toujours avantageusement, la fenêtre de visée de la tête de détection est équipée de moyens de protection à balayage par un gaz sous pression tel que de l'azote, de l'air comprimé ou du gaz naturel.

Toujours selon l'invention, la tête de détection peut être configurée pour pouvoir mesurer des distances allant jusqu'à 5 mètres.

Le dispositif de l'invention comprend en outre des moyens de régulation pour ajuster en temps réel un rapport gaz comburant / combustible au niveau de l'alimentation du brûleur et/ou la puissance du brûleur et/ou la durée de fonctionnement du brûleur en fonction de la distance mesurée par la tête de détection et l'électronique haute fréquence.

De préférence, lesdits moyens de régulation sont des moyens de régulation en boucle fermée.

Selon une deuxième modalité de mise en oeuvre préférée de l'invention, les moyens de mesure de distance entre l'extrémité du brûleur et la mitraille solide comprennent un système radar situé à l'intérieur ou à l'arrière du brûleur.

Un deuxième objet de la présente invention concerne un brûleur pour four électrique à arc équipé d'un dispositif de contrôle dynamique de la combustion tel que décrit ci-dessus.

Un troisième objet de la présente invention se rapporte à un procédé de contrôle dynamique de la combustion d'un brûleur dans un four électrique à arc, au moyen du dispositif à tête de détection optique décrit plus haut, caractérisé par les étapes suivantes :
- un faisceau laser pulsé incident visant la mitraille est émis au travers de l'ouverture située dans l'axe du brûleur ;
- le faisceau réfléchi par la mitraille est détecté ;
- la distance entre l'extrémité du brûleur et la mitraille est déduite par une mesure de temps de vol, c'est-à-dire en mesurant l'intervalle de temps qui s'écoule entre les impulsions laser respectivement émise et reçue ;
- un rapport gaz comburant / combustible au niveau de l'alimentation du brûleur et/ou la puissance du brûleur et/ou la durée de fonctionnement du brûleur est (sont) ajusté(s), de préférence selon une régulation en boucle fermée, en utilisant comme paramètre de régulation la valeur de la distance mesurée.

### Brève description des figures

La figure 1 représente schématiquement en coupe verticale un four d'aciérie comportant le dispositif de l'invention.

Les figures 2A et 2B représentent schématiquement deux cas de figure opérationnels illustrant la mise en oeuvre de l'invention.

### Description d'une forme d'exécution préférée de l'invention

L'objet principal de l'invention est de doter les brûleurs à oxyfuel montés sur les parois du four à arc de moyens de contrôle dynamique de la combustion.

Selon une forme d'exécution préférée de l'invention, ces moyens de contrôle comprennent un capteur optique donc sans contact, situé à l'extérieur du four à arc, pour estimer la distance entre l'extrémité du brûleur et une cible constituée par de la mitraille solide située en face de ladite extrémité. Le capteur optique est situé à l'intérieur du brûleur ou derrière celui-ci et se compose d'une tête de mesure comprenant une source qui émet un faisceau passant à l'intérieur du brûleur en direction de la cible, c'est-à-dire la ferraille non encore fondue. Le faisceau est réfléchi par la cible en direction d'un détecteur, se trouvant dans la tête de mesure, également en passant par l'intérieur du brûleur.

Le rapport oxygène / gaz naturel utilisé, la durée de fonctionnement et/ou la puissance du brûleur seront alors choisis en fonction de la charge effective en ferraille en face de chaque brûleur individuel, qui est estimée précisément au moyen du capteur de distance.

Tout autre moyen qu'un moyen optique, par exemple un système radar, permettant de déterminer des distances dans un environnement bruité par une haute température est susceptible d'être couvert également par l'objet de l'invention.

Un système pour la mesure de la distance instantanée entre l'extrémité du brûleur et la ferraille solide doit permettre d'ajuster les points de fonctionnement du brûleur et sa durée de fonctionnement correspondante, en vue d'éviter les désavantages mentionnés ci-dessus et ainsi d'augmenter l'efficacité de l'apport en énergie fossile.

Sur base du signal mesuré à partir du capteur de distance, le calcul de points de fonctionnement dynamiques va également permettre un fonctionnement automatique du brûleur. Le rapport oxygène / gaz naturel, la puissance du brûleur et la durée de fonctionnement de chaque brûleur individuel seront calculés en fonction de la charge effective en ferraille en face de chaque brûleur.

Dans sa phase de démarrage, le brûleur utilisera un rapport élevé oxygène / gaz naturel et une puissance inférieure à sa puissance nominale, qui peut être par exemple de 5 à 10 méga-Watt (MW). Ces conditions seront maintenues aussi longtemps que la ferraille est présente à proximité de l'extrémité du brûleur et jusqu'à ce qu'une cavité libre (vide de matière solide) soit créée au sein de la charge de ferraille, en face du brûleur.

Lorsqu'une telle cavité de fusion aura été formée, le brûleur sera normalement piloté dans les conditions stoechiométriques et à la puissance nominale. Le fonctionnement du brûleur devra être stoppé aussitôt que les conditions de fusion sont approchées, pour éviter toute réduction de son efficacité.

Le capteur de distance sera choisi pour pouvoir viser une cible portée à une très haute température locale, sans que la mesure ne soit trop perturbée par le rayonnement propre de la cible, aux longueurs d'onde utilisées. Ce capteur devra aussi s'accommoder de la présence des flammes générées par le brûleur, qui notamment peuvent absorber le faisceau émis et reçu par le capteur.

De manière avantageuse, le principe de mesure choisi est le suivant :
- un faisceau laser pulsé vise la ferraille à travers une ouverture centrale du brûleur ;
- la lumière réfléchie est détectée par un capteur adéquat ;
- la distance (D) mentionnée ci-dessus est déduite d'un calcul de "temps de vol", basé sur l'intervalle de temps séparant l'impulsion émise de l'impulsion reçue ; la vitesse à considérer étant la vitesse de la lumière, une électronique de détection haute fréquence est requise.

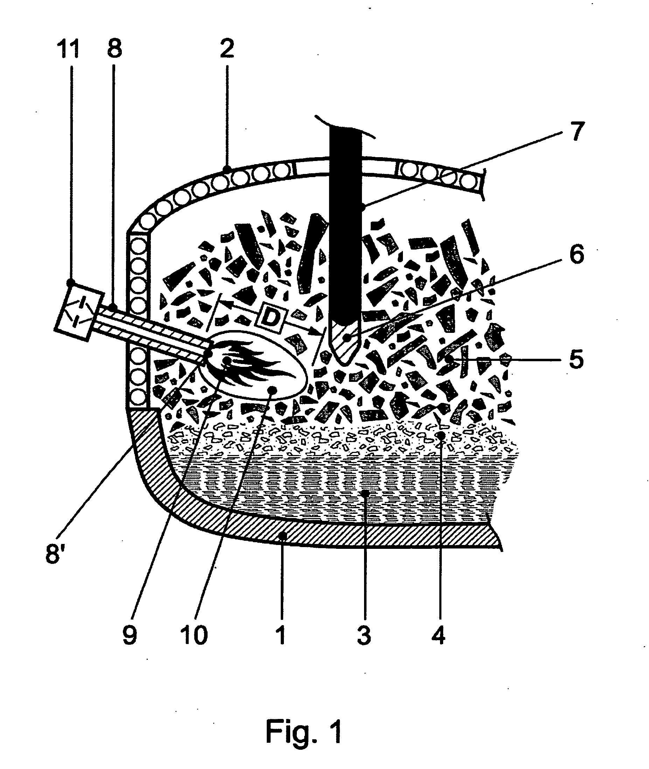

Un exemple d'installation susceptible de mettre en oeuvre le dispositif de l'invention est illustré sur la figure 1, qui montre une vue fragmentaire d'un four à arc d'aciérie, en coupe verticale, dans laquelle le brûleur comprenant le dispositif de l'invention est illustré schématiquement.

Le four à arc comprend en particulier une cuve 1 fermée par un couvercle 2, muni de moyens de refroidissement à l'eau. En fonctionnement, la cuve 1 contient un bain d'acier fondu 3 recouvert, pour mémoire, d'une couche de laitier 4. Après l'affinage, l'acier en fusion 3 est versé par un trou de coulée, bien connu de l'homme de métier (non représenté). Après la coulée, une nouvelle quantité de mitrailles 5 est chargée dans le four, couvercle 2 ouvert, au moyen d'un panier (non représenté). La charge de mitrailles 5 est fondue progressivement au moyen d'un arc électrique 6 formé entre une électrode 7 et le bain d'acier fondu 3, avec l'appoint de brûleurs 8, bien connu dans l'état de la technique et développant des flammes 9. Une tête de détection 11 de type capteur de distance est intégrée au sein du brûleur selon une forme d'exécution préférée de l'invention : celle-ci comporte notamment une diode laser qui génère un faisceau pulsé visant la ferraille 5 au travers d'une ouverture centrale 8' du brûleur ainsi qu'un photodétecteur disposé dans un angle solide lui permettant de détecter le faisceau laser réfléchi sur la ferraille 5.

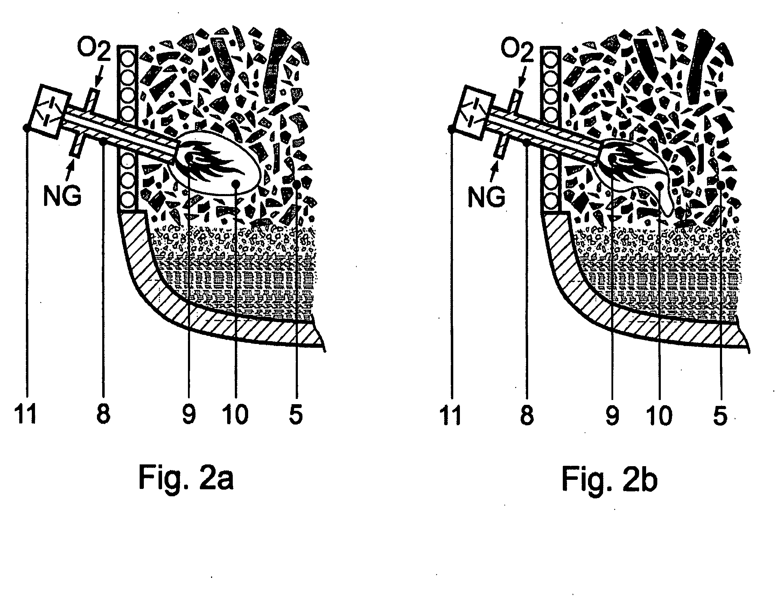

En fonctionnement normal ou efficace du brûleur, comme on l'a dit ci-dessus, une cavité libre est formée par la fusion en face de l'extrémité du brûleur 8, comme illustré à la figure 2A. Cette cavité définit une distance D entre l'extrémité du brûleur 8' et la ferraille frontale 5 toujours à l'état solide. Cette distance D est précisément mesurée par le dispositif de l'invention. Dans une telle situation, on alimentera le brûleur en oxygène et en carburant (gaz naturel, noté NG dans les figures 2A et 2B) selon des proportions stoechiométriques. A l'inverse, dans la situation illustrée dans la figure 2B, où la fusion n'est pas optimale et où on observe une disparition partielle de la cavité de fusion, la distance D mesurée est fatalement réduite par rapport à la situation précédente et on alimentera le brûleur avec un rapport oxygène / gaz naturel supérieur au rapport stoechiométrique et/ou avec une puissance réduite par rapport à la puissance nominale.

L'invention présente l'avantage qu'un contrôle dynamique et automatique des brûleurs permet d'assurer leur fonctionnement optimal de manière fiable et reproductible en vue d'obtenir une fusion de la ferraille améliorée ou optimisée au moyen d'une consommation en énergie électrique et en gaz réduite, donc en utilisant mieux l'énergie du brûleur.

## Revendications

1. Dispositif pour le contrôle dynamique de la combustion d'un brûleur (8) à combustible gazeux ou liquide dans un four électrique à arc, en particulier dans un four à arc d'aciérie, ledit brûleur (8) émettant en utilisation une flamme (9) par une ouverture située à une extrémité (8') du brûleur (8), au-dessus d'un bain de métal fondu (3) lui-même surmonté d'une charge de mitraille (5), **caractérisé en ce qu**'il comprend des moyens de mesure sans contact, situés à l'extérieur du four à arc, pour estimer la distance (D) entre une extrémité (8') du brûleur (8) et une cible constituée par de la mitraille solide (5) située en face de ladite extrémité (8'), lesdits moyens comprenant une source émettant un signal passant à l'intérieur dudit brûleur (8), ou d'un autre brûleur, en direction de ladite cible, et un détecteur où est capté ledit signal réfléchi par la cible, également en passant à l'intérieur dudit brûleur (8), respectivement de l'autre brûleur.

2. Dispositif selon la revendication 1, **caractérisé en ce que** les moyens de mesure de distance (D) entre l'extrémité (8') du brûleur (8) et la mitraille solide (5) comprennent une tête de détection (11) de type capteur de distance optique, situé à l'intérieur ou à l'arrière du brûleur (8), présentant un laser de préférence pulsé émettant un faisceau incident visant la mitraille (5) à travers une ouverture située dans l'axe du brûleur (8) et un photodétecteur apte à recevoir le faisceau laser réfléchi par la mitraille (5).

3. Dispositif selon la revendication 2, **caractérisé en ce que** la tête de détection (11) est configurée pour effectuer la mesure de distance sur une cible portée à haute température, de préférence à une température pouvant atteindre 1500°C et/ou pour effectuer ladite mesure dans un environnement ou sur un trajet optique présentant des flammes.

4. Dispositif selon la revendication 2 ou 3, **caractérisé en ce que** la tête de détection (11) est équipée de moyens de refroidissement.

5. Dispositif selon l'une quelconque des revendications 2 à 4, **caractérisé en ce que** le laser est une diode laser semi-conductrice émettant dans l'infrarouge, équipée d'une lentille collimatrice et d'un filtre, de préférence un filtre interférentiel, pour éliminer ou atténuer le bruit de fond lié au rayonnement propre du four à arc.

6. Dispositif selon l'une quelconque des revendications 2 à 5, **caractérisé en ce que** le photodétecteur comprend une lentille de réception avec un filtre interférentiel et au moins une photodiode, couplée à un système électronique de détection haute fréquence.

7. Dispositif selon la revendication 6, **caractérisé en ce que** la photodiode est couplée par fibre optique au système électronique de détection haute fréquence.

8. Dispositif selon l'une quelconque des revendications 2 à 7, **caractérisé en ce que** la fenêtre de visée de la tête de détection (11) est équipée de moyens de protection à balayage par un gaz sous pression tel que de l'azote, de l'air comprimé ou du gaz naturel.

9. Dispositif selon l'une quelconque des revendications 2 à 8, **caractérisé en ce que** la tête de détection (11) est configurée pour pouvoir mesurer des distances allant jusqu'à 5 mètres.

10. Dispositif selon l'une quelconque des revendications précédentes, **caractérisé en ce qu'**il comprend en outre des moyens de régulation pour ajuster en temps réel un rapport gaz comburant / combustile au niveau de l'alimentation du brûleur et/ou la puissance du brûleur et/ou la durée de fonctionnement du brûleur en fonction de la distance (D) mesurée par la tête de détection (11) et l'électronique haute fréquence.

11. Dispositif selon la revendication 10, **caractérisé en ce que** lesdits moyens de régulation sont des moyens de régulation en boucle fermée.

12. Dispositif selon la revendication 1, **caractérisé en ce que** les moyens de mesure de distance (D) entre l'extrémité (8') du brûleur (8) et la mitraille solide comprennent un système radar situé à l'intérieur ou à l'arrière du brûleur (8).

13. Brûleur pour four électrique à arc équipé d'un dispositif de contrôle dynamique de la combustion selon l'une quelconque des revendications précédentes.

14. Procédé de contrôle dynamique de la combustion d'un brûleur (8) dans un four électrique à arc, au moyen du dispositif à tête de détection optique (11) selon l'une quelconque des revendications 2 à 11, **caractérisé par** les étapes suivantes :
- un faisceau laser pulsé incident visant la mitraille (5) est émis au travers de l'ouverture située dans l'axe du brûleur (8);
- le faisceau réfléchi par la mitraille (5) est détecté;
- la distance (D) entre l'extrémité du brûleur (8') et la mitraille (5) est déduite par une mesure de temps de vol, c'est-à-dire en mesurant l'intervalle de temps qui s'écoule entre les impulsions laser respectivement émise et reçue ;
- un rapport gaz comburant / combustible au niveau de l'alimentation du brûleur et/ou la puissance du brûleur et/ou la durée de fonctionnement du brûleur est (sont) ajusté(s), de préférence selon une régulation en boucle fermée, en utilisant comme paramètre de régulation la valeur de la distance (D) mesurée.

## Claims

1. Device for the dynamic control of the combustion of a burner (8) with gas or liquid fuel in an electric arc furnace, in particular in a steelworks arc furnace, said burner (8) emitting in use a flame (9) through an aperture located at one end (8') of the burner (8) over a bath of molten metal (3), itself beneath a charge of scrap (5), **characterised in that** it comprises contactless measuring means outside the arc furnace for estimating the distance (D) between one end (8') of the burner (8) and a target made of solid scrap (5) in front of said end (8'), said means comprising a source emitting a signal that passes inside said burner (8) or inside another burner in the direction of said target and a detector where said signal reflected by the target, which also passes inside said burner (8) or inside the other burner respectively, is detected.

2. Device according to Claim 1, **characterised in that** the means for measuring the distance (D) between the end (8') of the burner (8) and the solid scrap (5) comprise a detection head (11) of an optical distance-sensor type located inside or at the back of the burner (8), having a laser, preferably pulsed, emitting an incident beam aimed at the scrap (5) through an aperture on the axis of the burner (8) and a photodetector capable of receiving the laser beam reflected by the scrap (5).

3. Device according to Claim 2, **characterised in that** the detection head (11) is configured so as to measure the distance on a target brought to high temperature, preferably to a temperature that may reach 1,500°C and/or to take said measurement in an environment or on an optical track with flames.

4. Device according to Claim 2 or 3, **characterised in that** the detection head (11) is provided with a cooling means.

5. Device according to any one of Claims 2 to 4, **characterised in that** the laser is a semiconductor laser diode emitting in the infrared, provided with a collimating lens and a filter, preferably an interferential filter, so as to eliminate or attenuate the background noise associated with the actual radiation of the arc furnace.

6. Device according to any one of Claims 2 to 5, **characterised in that** the photodetector comprises a receiving lens with an interferential filter and at least a photodiode linked to a high-frequency electronic detection system.

7. Device according to Claim 6, **characterised in that** the photodiode is linked by optic fibre to the high-frequency electronic detection system.

8. Device according to any one of Claims 2 to 7, **characterised in that** the inspection window of the detection head (11) is provided with a protection means by a flush of a gas under pressure such as nitrogen, compressed air or natural gas.

9. Device according to any one of Claims 2 to 8, **characterised in that** the detection head (11) is configured so as to be able to measure distances of up to 5 metres.

10. Device according to any one of the preceding claims, **characterised in that** it also comprises a regulation means for adjusting in real time the ratio of oxidising gas/fuel at the level of the burner intake and/or the power of the burner and/or the period of operation of the burner as a function of the distance (D) measured by the detection head (11) and the high-frequency electronics.

11. Device according to Claim 10, **characterised in that** said regulation means are a regulation means in a closed loop.

12. Device according to Claim 11, **characterised in that** the means for measuring the distance (D) between the end (8') of the burner (8) and the solid scrap comprise a radar system inside or at the back of the burner (8).

13. Burner for an electric arc furnace provided with a device for the dynamic control of the combustion according to any one of the preceding claims.

14. Method for the dynamic control of the combustion of a burner (8) in an electric arc furnace by means of the device with an optical detection head (11) according to any one of Claims 2 to 11, **characterised by** the following stages:
- a pulsed incident laser beam aimed at the scrap (5) is emitted through the aperture on the axis of the burner (8);
- the beam reflected by the scrap (5) is detected;
- the distance (D) between the end (8') of the burner and the scrap (5) is determined by measuring the travel time, i.e. by measuring the period of time that passes between the laser impulses emitted and received, respectively;
- the ratio of oxidising gas/fuel at the level of the burner intake and/or the power of the burner and/or the period of operation of the burner is/are adjusted, preferably by closed-loop regulation by using the value of the measured distance (D) as a regulation parameter.

## Patentansprüche

1. Vorrichtung zur dynamischen Steuerung der Verbrennung eines Brenners (8) mit flüssigem oder gasförmigen Kraftstoff in einem elektrischen Lichtbogenofen, insbesondere einem Ofen zum Schmelzen von Stahl; besagter Brenner (8) gibt über eine an einer Stirnseite (8') des Brenners (8) angeordnete Öffnung eine Flamme (9) auf ein darunter liegendes Bad aus geschmolzenes Metall (3) ab, über dem wiederum die Beschickung mit Alteisen (5) angeordnet ist. Die Vorrichtung ist **dadurch gekennzeichnet, dass** sie Hilfsmittel für das berührungslose Messen umfasst, die sich außerhalb des Lichtbogenofens befinden, um den Abstand (D) zwischen der einen Stirnseite (8') des Brenners (8) und einem Zielbereich zu messen, der durch das feste Alteisen (5) gebildet wird, das sich vor der besagten Stirnseite (8') befindet. Die besagten Hilfsmittel umfassen eine Quelle, die ein durch das Innere des besagten Brenners (8) oder eines anderen Brenners verlaufendes Signal in Richtung des besagten Zielbereichs abgibt, sowie einen Detektor, der das durch den Zielbereich abgelenkte Signal, das gleichermaßen durch das Innere des besagten Brenners (8) bzw. des anderen Brenners verläuft, erfassen kann.

2. Vorrichtung gemäß dem Anspruch 1, **dadurch gekennzeichnet, dass** die Hilfsmittel zur Messung des Abstands (D) zwischen der Stirnseite (8') des Brenners (8) und dem festen Altmetall (5) einen Erkennungskopf (11) in der Art eines optischen Abstandssensors enthalten, der sich im Inneren oder hinter dem Brenner (8) befindet; dieses Hilfsmittel enthält einen vorzugsweise gepulsten Laser, der einen ursprünglich auf das Altmetall (5) ausgerichteten Strahl durch eine in der Achse des Brenners (8) angeordnete Öffnung abgibt, sowie über eine Fotozelle, die in der Lage ist, den durch das Altmetall (5) zurück geworfenen Laserstrahl zu empfangen.

3. Vorrichtung gemäß dem Anspruch 2, **dadurch gekennzeichnet, dass** der Erkennungskopf (11) derart konfiguriert ist, dass eine Abstandsmessung an einem auf eine hohe Temperatur, vorzugsweise von bis 1500°C, gebrachten Zielbereich und / oder in einer Umgebung oder auf einer Verlaufsstrecke durchgeführt werden kann, in der Flammen vorhanden sind.

4. Vorrichtung gemäß den Ansprüchen 2 oder 3, **dadurch gekennzeichnet, dass** der Erkennungskopf (11) mit einer Kühlvorrichtung ausgestattet ist.

5. Vorrichtung gemäß einem der Ansprüche 2 bis 4, **dadurch gekennzeichnet, dass** es sich bei dem Laser um eine Halbleiter-Laserdiode handelt, die ein Signal im Infrarotspektrum abgibt und mit einer Richtlinse und einem Filter, vorzugsweise einem Interferenzfilter, ausgestattet ist, um die in Verbindung mit der Eigenstrahlung des Lichtbogenofens vorhandenen Grundinterferenzen zu beseitigen bzw. zu dämpfen.

6. Vorrichtung gemäß einem der Ansprüche 2 bis 5, **dadurch gekennzeichnet, dass** die Fotozelle eine Empfangslinse mit einem Interferenzfilter und mindestens eine Fotodiode enthält, die an ein elektronisches System zur Erkennung von Hochfrequenzsignalen angeschlossen ist.

7. Vorrichtung gemäß dem Anspruch 6, **dadurch gekennzeichnet, dass** die Fotodiode über ein faseroptisches Kabel an ein elektronisches System zur Erkennung von Hochfrequenzsignalen angeschlossen ist.

8. Vorrichtung gemäß einem der Ansprüche 2 bis 7, **dadurch gekennzeichnet, dass** das Zielfenster des Erkennungskopfes (11) mit Hilfsmitteln zum Schutz der Abtastung durch ein Unterdruckgas wie z. B. Stickstoff, Druckluft oder Erdgas ausgestattet ist.

9. Vorrichtung gemäß einem der Ansprüche 2 bis 8, **dadurch gekennzeichnet, dass** der Erkennungskopf (11) derart konfiguriert ist, dass er Abstände bis zu 5 m messen kann.

10. Vorrichtung gemäß einem der vorherigen Ansprüche, **dadurch gekennzeichnet, dass** sie ferner Regelvorrichtungen zur Anpassung in Echtzeit des Verhältnisses Brennstoff / Kraftgas auf Ebene der Brennerversorgung und / oder der Leistung des Brenners und / oder der Funktionsdauer des Brenners in Abhängigkeit des Abstandes (D) enthält, wie durch den Erkennungskopf (11) und die Hochfrequenzelektronik gemessen.

11. Vorrichtung gemäß Anspruch 10, **dadurch gekennzeichnet, dass** es sich bei den besagten Regelvorrichtungen um Vorrichtungen zur Regelung im geschlossenen Regelkreis handelt.

12. Vorrichtung gemäß dem Anspruch 1, **dadurch gekennzeichnet, dass** die Hilfsmittel zur Messung des Abstands (D) zwischen der Stirnseite (8') des Brenners (8) und dem festen Alteisen ein Radarsystem enthalten, das sich im Inneren oder hinter dem Brenner befindet(8).

13. Brenner für einen elektrischen Lichtbogenofen, der mit einer Vorrichtung zur dynamischen Verbrennungssteuerung gemäß einem der vorherigen Ansprüche ausgestattet ist.

14. Verfahren zur dynamischen Steuerung der Verbrennung eines Brenners (8) in einem elektrischen Lichtbogenofen mithilfe einer Vorrichtung mit optischem Erkennungskopf (11) gemäß einem der Ansprüche 2 bis 11 und durch die folgenden Schritte **gekennzeichnet**:
- Ein gepulster Laser zielt anfangs auf das Altmetall (5) und wird durch eine Öffnung abgegeben, die sich auf der Brennerachse (8) befindet;
- Der durch das Altmetall (5) abgelenkte Strahl wird erkannt;
- Der Abstand (D) zwischen der Stirnseite des Brenners (8') und dem Altmetall (5) wird durch eine Messung der Flugzeit abgeleitet, die der Strahl für die Strecke benötigt hat, d. h. durch das Messen der Zeitintervalle, die sich zwischen jeweils Aus- und Eingang der Laserimpulse erstrecken.
- Das jeweilige Verhältnis zwischen Kraftgas / Brennstoff auf Ebene der Brennerversorgung und / oder die Leistung des Brenners und / oder die Funktionsdauer des Brenners wird (werden)angepasst, vorzugsweise gemäß einer Regelung im geschlossenen Regelkreis, indem als Regelparameter der Wert des gemessenen Abstands (D) verwendet wird.
